# EUROPEAN PATENT APPLICATION

(11) **EP 3 745 316 A1**
(43) Date of publication of application: **02.12.2020**
(21) Application number: 19899276.0
(22) Date of filing: 29.10.2019
(51) Int. Cl.: G06N 3/08

(54) **LEARNING DEVICE, IDENTIFICATION DEVICE, AND PROGRAM**

(30) Priority: 17.12.2018 JP 2018235235
(71) Applicant: Sony Corporation, 108-0075 Tokyo (JP)
(72) Inventor: OZAKI, Natsuko, Tokyo 108-0075 (JP)
(74) Representative: MFG Patentanwälte Meyer-Wildhagen Meggle-Freund Gerhard PartG mbB
(86) International application number: PCT/JP2019/042235
(87) International publication number: WO 2020/129412

(57) **Abstract**

Provided is a learning device including: a first learning unit that learns parameters of a first neural network based on a first error between the same data as input data to a second neural network connected to a front stage of the first neural network and output data of the first neural network; and a second learning unit that learns at least some parameters of the second neural network based on a second error between data different from the input data and output data of the second neural network and sign-inverted data of an error transmitted from the first neural network.

## Description

### Field

The present disclosure relates to a learning device, an identification device, and a program.

### Background

In recent years, there is known a technique of extracting a feature amount based on input data for identification and performing identification processing based on the extracted feature amount. For example, there is known a technique for improving the accuracy of feature amount extraction and identification processing by learning the feature amount extraction based on input data for learning and the identification processing based on the feature amount (for example, see Non Patent Literature 1). An example of the input data is image data including an individual face image. At this time, the identification processing may be processing of identifying an individual whose face appears in the image data. Alternatively, an example of the input data is sound data including individual voice data. At this time, the identification processing may be processing of identifying an individual whose voice is recorded in the sound data.

As described above, the input data includes high-resolution information about an individual. Therefore, a user often wants to keep the input data itself secret. Therefore, the feature amount may be stored instead of the input data, and the identification processing may be performed on the input data for identification using the stored feature amount.

### Citation List

### Non Patent Literature

Non Patent Literature 1: Sun, Yi, and two others, "Deep Learning Face Representation from Predicting 10,000 Classes", [online], CVPR2014, Internet <http://mmlab.ie.cuhk.edu.hk/pdf/YiSun CVPR14.pdf>
Non Patent Literature 2: Yandong Wen1, and three others, "A Discriminative Feature Learning Approach for Deep Face Recognition", [online], ECCV2016, Internet <http://ydwen.github.io/papers/WenECCV16.pdf>

### Summary

### Technical Problem

However, even when a feature amount is stored instead of input data, there is a risk that information about an individual is restored from the stored feature amount. Therefore, it is desired to provide a technology capable of utilizing a feature amount that makes it difficult to restore information about an individual while enabling identification processing.

### Solution to problem

According to the present disclosure, a learning device is provided that includes: a first learning unit that learns parameters of a first neural network based on a first error between the same data as input data to a second neural network connected to a front stage of the first neural network and output data of the first neural network; and a second learning unit that learns at least some parameters of the second neural network based on a second error between data different from the input data and output data of the second neural network and sign-inverted data of an error transmitted from the first neural network.

According to the present disclosure, a program that causes a computer to function as a learning device is provided that includes: a first learning unit that learns parameters of a first neural network based on a first error between the same data as input data to a second neural network connected to a front stage of the first neural network and output data of the first neural network; and a second learning unit that learns at least some parameters of the second neural network based on a second error between data different from the input data and output data of the second neural network and sign-inverted data of an error transmitted from the first neural network.

According to the present disclosure, an identification device is provided that includes: for a neural network learned in a learning unit that learns parameters of a first neural network based on a first error between the same data as input data to a second neural network connected to a front stage of the first neural network and output data of the first neural network, and learns at least some parameters of the second neural network based on a second error between data different from the input data and output data of the second neural network and sign-inverted data of an error transmitted from the first neural network, an input unit that inputs identification target data; and an acquisition unit that acquires identification information corresponding to the output data based on the output data of the neural network.

According to the present disclosure, a program that causes a computer to function as an identification device is provided that includes: for a neural network learned in a learning unit that learns parameters of a first neural network based on a first error between the same data as input data to a second neural network connected to a front stage of the first neural network and output data of the first neural network, and learns at least some parameters of the second neural network based on a second error between data different from the input data and output data of the second neural network and sign-inverted data of an error transmitted from the first neural network, an input unit that inputs identification target data; and an acquisition unit that acquires identification information corresponding to the output data based on the output data of the neural network.

### Brief Description of Drawings

FIG. 1 is a diagram illustrating an example of a general neural network.
FIG. 2 is a diagram illustrating a configuration example of an information processing system according to an embodiment of the present disclosure.
FIG. 3 is a diagram illustrating an example of a functional configuration of a learning device according to an embodiment of the present disclosure.
FIG. 4 is a diagram illustrating an example of a functional configuration of a client device according to an embodiment of the present disclosure.
FIG. 5 is a diagram illustrating an example of a functional configuration of a server device according to an embodiment of the present disclosure.
FIG. 6 is a diagram illustrating an example of a neural network used for learning processing according to an embodiment of the present disclosure.
FIG. 7 is a diagram illustrating a first example of conversion from an error transmitted from a first neural network to sign-inverted data.
FIG. 8 is a diagram illustrating a second example of conversion from the error transmitted from the first neural network to the sign-inverted data.
FIG. 9 is a flowchart illustrating an example of a flow of learning processing according to an embodiment of the present disclosure.
FIG. 10 is a flowchart illustrating an example of a flow of registration processing according to an embodiment of the present disclosure.
FIG. 11 is a sequence diagram illustrating an example of a flow of the registration processing according to the embodiment of the present disclosure.
FIG. 12 is a flowchart illustrating an example of a flow of identification processing according to an embodiment of the present disclosure.
FIG. 13 is a sequence diagram illustrating an example of a flow of the identification processing according to the embodiment of the present disclosure.
FIG. 14 is a diagram illustrating an example of a neural network according to a first modified example.
FIG. 15 is a diagram illustrating an example of a neural network according to a second modified example.
FIG. 16 is a block diagram illustrating a hardware configuration example of a learning device according to an embodiment of the present disclosure.

### Description of Embodiments

Hereinafter, preferred embodiments of the present disclosure will be described in detail with reference to the accompanying drawings. Note that in the present specification and the drawings, components having substantially the same functional configuration are denoted by the same reference numerals, and redundant description is omitted.

In addition, in the present specification and the drawings, a plurality of components having substantially the same or similar functional configuration may be distinguished by adding different numerals after the same reference numerals. However, when it is not necessary to particularly distinguish each of the plurality of components having substantially the same or similar functional configuration, only the same reference numeral is assigned. In addition, similar components in different embodiments may be distinguished by adding different alphabets after the same reference numerals. However, if it is not necessary to distinguish each of the similar components, only the same reference numeral is assigned.

Note that, the description will be made in the following order.
0. Overview
1. Details of embodiment
1.1. Configuration example of information processing system
1.2. Functional configuration example of learning device
1.3. Functional configuration example of client device
1.4. Functional configuration example of server device
1.5. Details of learning processing
1.6. Flow of learning processing
1.7. Flow of registration processing
1.8. Flow of identification processing
2. Modified example
3. Hardware configuration example
4. Conclusion

### <0. Overview>

In recent years, there is known a technique of extracting a feature amount based on input data for identification and performing identification processing based on the extracted feature amount. For example, there is known a technique for improving the accuracy of feature amount extraction and identification processing by learning the feature amount extraction based on input data for learning and the identification processing based on the feature amount. As an example, the learning processing can be performed by updating a parameter of a neural network (for example, a weight of a neuron included in each processing layer) based on the input data for learning. In addition, the identification processing may be performed using the neural network after the parameter update based on input data for identification.

An example of the input data is image data including an individual face image. At this time, the identification processing may be processing of identifying an individual whose face appears in the image data. Alternatively, an example of the input data is sound data including individual voice data. At this time, the identification processing may be processing of identifying an individual whose voice is recorded in the sound data. In the present embodiment, it is mainly assumed that image data including an individual face image is used as the input data. However, as the input data, the sound data including the individual voice data may be used or data other than the image data and the sound data may be used.

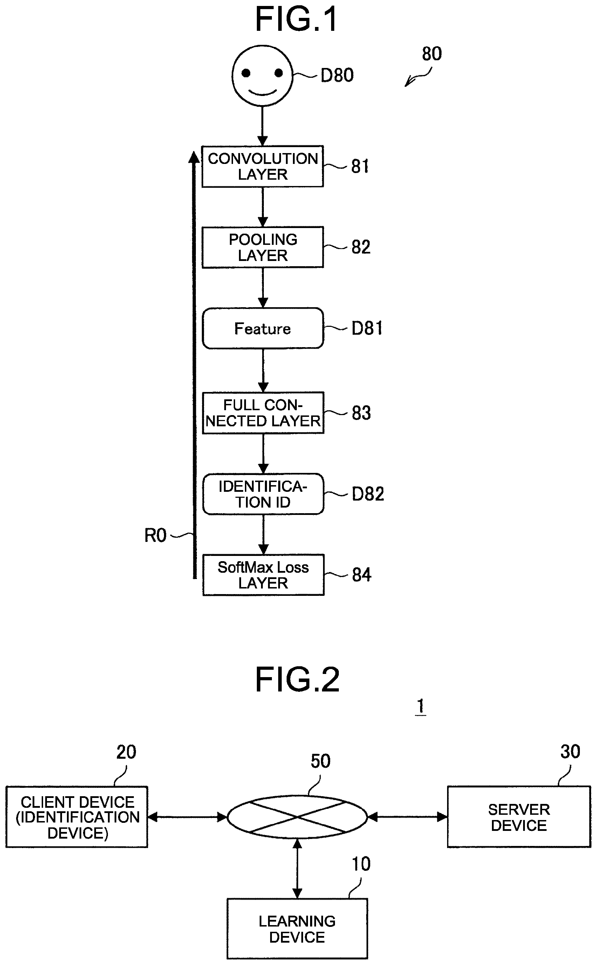

As described above, the input data includes high-resolution information about an individual. Therefore, a user often wants to keep the input data itself secret. Therefore, the feature amount may be stored instead of the input data, and the identification processing may be performed on the input data for identification using the stored feature amount. Here, general learning processing and identification processing will be described. FIG. 1 is a diagram illustrating an example of a general neural network. As illustrated in FIG. 1, a general neural network 80 includes a convolution layer 81, a pooling layer 82, a full connected (FC) layer 83, and a SoftMax Loss layer 84.

Input data for learning D80 includes a face image. When such input data D80 for learning is input to an upstream side of the neural network 80, the input data D80 for learning is forward propagated from upstream to downstream. The convolution layer 81 and the pooling layer 82 output Feature D81 (feature amount) based on the input data D80 for learning. In addition, the full connected layer 83 outputs an identification ID D82 based on the Feature D81.

The SoftMax Loss layer 84 applies a SoftMax function to the identification ID D82 and calculates a value (SoftMax Loss) obtained by taking a cross entropy of the identification ID after applying the SoftMax function and teacher data as an example of an error. The teacher data is an ID for identifying an individual whose face appears in the input data for learning D80.

Subsequently, by back-propagating the SoftMax Loss (in a direction R0) from downstream to downstream (using an error backpropagation method), parameters of each of the convolution layer 81 and the full connected layer 83 are updated (learned) to reduce the SoftMax Loss. As a parameter updating method, a stochastic gradient descent method (SGD) or the like is used. Such updating of the parameters based on the input data for learning D80 is repeatedly performed on N (N is an integer of 1 or more) input data for learning D80.

By the convolution layer 81 and the pooling layer 82 obtained by such learning, a feature amount is extracted from the input data, and the extracted feature amount is stored instead of the input data and used for the identification processing. However, even when the feature amount is stored instead of the input data, there is a risk that information about an individual (here, a face image) is restored from the stored feature amount. For example, according to an auto encoder (AE) learned to restore an image for auto encoder (AE) learning, it is expected that information about an individual (here, a face image) can be easily restored from the feature amount.

Therefore, an embodiment of the present disclosure mainly proposes a technology that can use a feature amount that enables the identification processing and a feature amount in which the information about the individual is difficult to be restored. As an example, the embodiment of the present disclosure mainly proposes a technology that can use a feature amount that enables identification of an individual whose face appears in the input data (image data) and a feature amount in which a face image is difficult to be restored.

The overview of the embodiment of the present disclosure has been described above.

### <1. Details of embodiment>

### [1.1. Configuration example of information processing system]

Subsequently, a configuration example of an information processing system according to an embodiment of the present disclosure will be described with reference to the drawings. FIG. 2 is a diagram illustrating a configuration example of an information processing system according to an embodiment of the present disclosure. As illustrated in FIG. 2, an information processing system 1 according to an embodiment of the present disclosure includes a learning device 10, a client device 20, a server device 30, and a network 50. The learning device 10, the client device 20, and the server device 30 are configured to be able to communicate with each other via the network 50.

The learning device 10 is configured by, for example, a computer (for example, a workstation or the like). The learning device 10 is used, for example, by an application developer, and generates an application (neural network application) based on an operation by the application developer (or automatically). In addition, the learning device 10 generates (constructs) an application (learned neural network application) by performing learning based on input data for learning.

Upon generating the application (the learned neural network application), the learning device 10 provides the generated application to the client device 20 via the network 50. In addition, the learning device 10 provides a combination of the feature amount obtained by the learning and the identification information to the server device 30 via the network 50. Note that, in the embodiment of the present disclosure, the learning device 10 exists independently of the client device 20 and the server device 30, but the learning device 10 may be incorporated in either the client device 20 or the server device 30. In addition, in the embodiment of the present disclosure, the learning device 10 is connected to the network 50, but the learning device 10 may not be connected to the network 50. At this time, the application generated by the learning device 10 may be incorporated in the client device 20 or the server device 30 in advance.

The client device 20 can function as an identification device that performs the identification processing. The client device 20 may typically be a smartphone, but may be a tablet terminal, a mobile phone, a personal computer (PC), or another electronic device. Upon downloading the application (learned neural network application) from the learning device 10 based on the operation by the user (or automatically), the client device 20 executes the downloaded application. The client device 20 performs predetermined identification processing based on the input data for identification by executing the application.

The server device 30 is configured by, for example, a computer. The server device 30 receives a request transmitted from the client device 20 via the network 50, and returns information corresponding to the request to the client device 20 via the network 50. Specifically, when the server device 30 receives the feature amount extracted based on the input data for identification from the client device 20 via the network 50, the server device 30 transmits identification information corresponding to the received feature amount to the client device 20 via the network 50. Note that the function of the server device 30 may be included in the client device 20.

The configuration example of the information processing system 1 according to the embodiment of the present disclosure has been described above.

### [1.2. Functional configuration example of learning device]

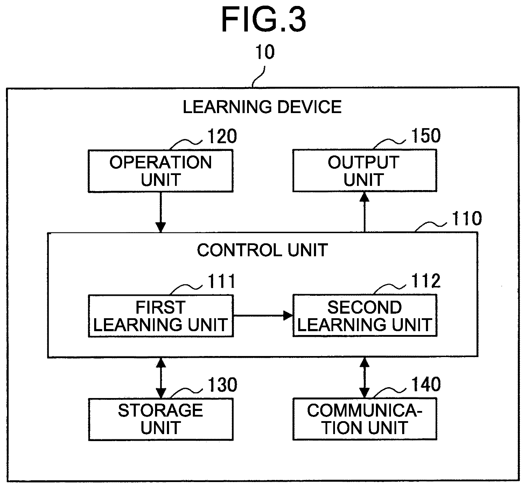

Subsequently, a functional configuration example of a learning device 10 according to an embodiment of the present disclosure will be described. FIG. 3 is a diagram illustrating an example of a functional configuration of the learning device 10 according to the embodiment of the present disclosure. As illustrated in FIG. 3, a learning device 10 includes a control unit 110, an operation unit 120, a storage unit 130, a communication unit 140, and an output unit 150.

The control unit 110 controls each unit of the learning device 10. The control unit 110 may be configured by, for example, one or a plurality of central processing units (CPUs), or may be configured by one or a plurality of graphics processing units (GPUs). When the control unit 110 is configured by a processing device such as the CPU or the GPU, the processing device may be configured by an electronic circuit. The control unit 110 can be realized by executing a program by such a processing device. The control unit 110 includes a first learning unit 111 and a second learning unit 112. Details of these blocks will be described later.

The operation unit 120 has a function of receiving an input of an operation by a developer. In the embodiment of the present disclosure, it is mainly assumed that the operation unit 120 includes a mouse and a keyboard. However, the operation unit 120 is not limited to a case including the mouse and the keyboard. For example, the operation unit 120 may include a touch panel, may include a touch pad, may include a switch, may include a lever, and may include a button. In addition, the operation unit 120 may include a microphone that detects a voice of the developer, or may include an image sensor that detects a line of sight of the developer.

The storage unit 130 is a recording medium that includes a memory, stores a program executed by the control unit 110, and stores data necessary for executing the program. In addition, the storage unit 130 temporarily stores data for calculation by control unit 110. The storage unit 130 includes a magnetic storage device, a semiconductor storage device, an optical storage device, a magneto-optical storage device, or the like.

The communication unit 140 is configured to include a communication circuit, and has a function of communicating with the client device 20 connected to the network 50 via the network 50. In addition, the communication unit 140 has a function of communicating with the server device 30 connected to the network 50 via the network 50.

The output unit 150 has a function of outputting information to a developer. The type of the output unit 150 is not limited. For example, the output unit 150 may include a display capable of performing a display visible to the developer, and the display may be a liquid crystal display, an organic electro-luminescence (EL) display, or another display. Alternatively, the output unit 150 may include a tactile presentation device that presents a tactile sensation to the developer, or may include a speaker that presents a sound to the developer.

The functional configuration example of the learning device 10 according to the embodiment of the present disclosure has been described above.

### [1.3. Functional configuration example of client device]

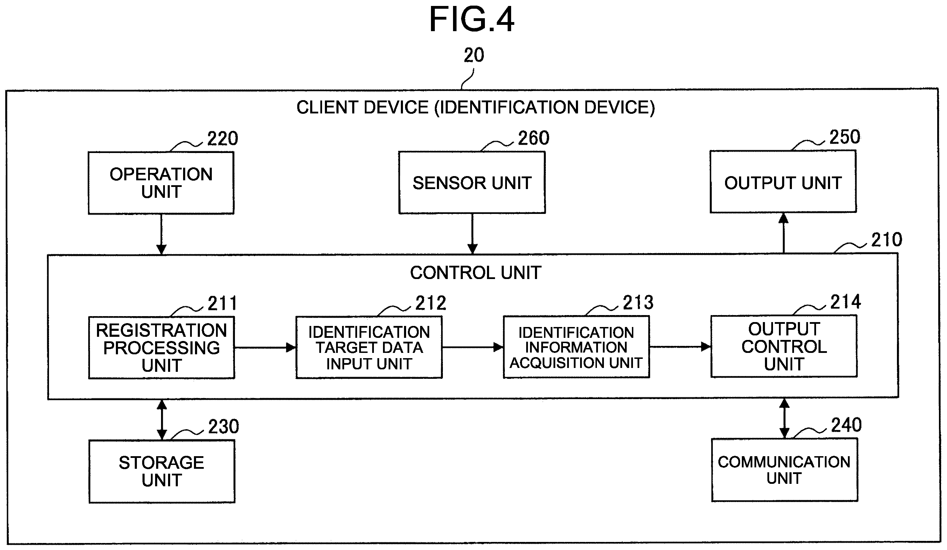

Subsequently, a functional configuration example of a client device 20 according to an embodiment of the present disclosure will be described. FIG. 4 is a diagram illustrating a functional configuration example of a client device 20 according to an embodiment of the present disclosure. As illustrated in FIG. 4, the client device 20 includes a control unit 210, an operation unit 220, a storage unit 230, a communication unit 240, and an output unit 250.

The control unit 210 controls each unit of the client device 20. The control unit 210 may be configured by, for example, one or a plurality of central processing units (CPUs), or may be configured by one or a plurality of graphics processing units (GPUs). When the control unit 210 is configured by a processing device such as the CPU or the GPU, the processing device may be configured by an electronic circuit. The control unit 210 can be realized by executing a program by such a processing device. The control unit 210 includes a registration processing unit 211, an identification target data input unit 212, an identification information acquisition unit 213, and an output control unit 214. Details of these blocks will be described later.

The operation unit 220 has a function of receiving an input of an operation by a user. In the embodiment of the present disclosure, it is mainly assumed that the operation unit 220 includes a touch panel. However, the operation unit 220 is not limited to a case including the touch panel. For example, the operation unit 220 may include a mouse, may include a keyboard, may include a touch pad, may include a switch, may include a lever, and may include a button. In addition, the operation unit 220 may include a microphone that detects a voice of the user, or may include an image sensor that detects a line of sight of the user.

The storage unit 230 is a recording medium that includes a memory, stores a program executed by the control unit 210, and stores data necessary for executing the program. In addition, the storage unit 230 temporarily stores data for calculation by the control unit 210. The storage unit 230 includes a magnetic storage device, a semiconductor storage device, an optical storage device, a magneto-optical storage device, or the like.

The communication unit 240 is configured to include a communication circuit, and has a function of communicating with the learning device 10 connected to the network 50 via the network 50. In addition, the communication unit 240 has a function of communicating with the server device 30 connected to the network 50 via the network 50.

The output unit 250 has a function of outputting information to the user. The type of the output unit 250 is not limited. For example, the output unit 250 may include a display capable of performing a display visible to the user, and the display may be a liquid crystal display, an organic electro-luminescence (EL) display, or another display. Alternatively, the output unit 250 may include a tactile presentation device that presents a tactile sensation to the user, or may include a speaker that presents a sound to the user.

The sensor unit 260 is configured to include a sensor, and detects input data for identification (identification target data) by the sensor. Here, the type of the sensor is not limited. For example, the sensor may include a camera (including an image sensor), may include a microphone, or may include a sensor different from the camera and the microphone. The input data for identification detected by the sensor unit 260 is provided to the control unit 210 and used for identification processing by an application (learned neural network application).

The functional configuration example of the client device 20 according to the embodiment of the present disclosure has been described above.

### [1.4. Functional configuration example of server device]

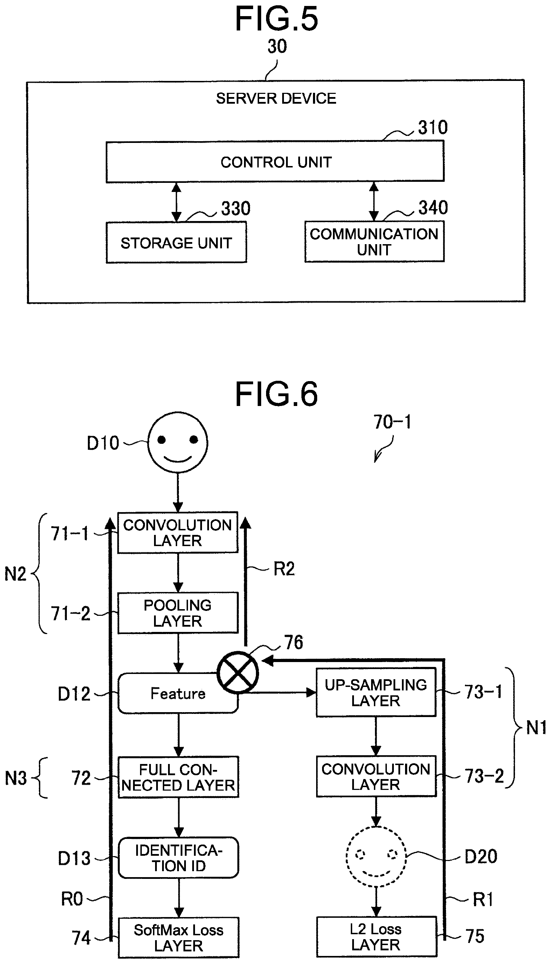

Subsequently, a functional configuration example of a server device 30 according to an embodiment of the present disclosure will be described. FIG. 5 is a diagram illustrating a functional configuration example of a server device 30 according to an embodiment of the present disclosure. As illustrated in FIG. 5, the server device 30 includes a control unit 310, a storage unit 330, and a communication unit 340.

The control unit 310 controls each unit of the server device 30. The control unit 310 may be configured by, for example, one or a plurality of central processing units (CPUs), or may be configured by one or a plurality of graphics processing units (GPUs). When the control unit 310 is configured by a processing device such as the CPU or the GPU, the processing device may be configured by an electronic circuit. The control unit 310 can be realized by executing a program by such a processing device.

The storage unit 330 is a recording medium that includes a memory, stores a program executed by the control unit 310, and stores data necessary for executing the program. In addition, the storage unit 330 temporarily stores data for calculation by the control unit 310. The storage unit 330 includes a magnetic storage device, a semiconductor storage device, an optical storage device, a magneto-optical storage device, or the like.

The communication unit 340 is configured to include a communication circuit, and has a function of communicating with the learning device 10 connected to the network 50 via the network 50. In addition, the communication unit 340 has a function of communicating with the client device 20 connected to the network 50 via the network 50.

The functional configuration example of the server device 30 according to the embodiment of the present disclosure has been described above.

### [1.5. Details of learning processing]

Subsequently, details of learning processing performed by the learning device 10 according to an embodiment of the present disclosure will be described. Here, the type of data (input data for learning) used for the learning processing is not limited. For example, the input data for learning may include at least one of image data and sound data. The input data for learning includes N (N is an integer of 1 or more) image data, and the teacher data includes ID labels (that is, N ID labels) corresponding to each of the N image data.

In the following, it is mainly assumed that image data including a user's face image is used as the input data for learning. At this time, the identification processing may be processing of identifying a user whose face appears in the image data. However, sound data including user's voice data may be used as the input data for learning. At this time, the identification processing may be processing of identifying a user whose voice is recorded in the sound data.

More specifically, in the following, when the user is identified as a pre-registered individual (name) based on the input data in which the user's face appears (input data for identification), it is mainly assumed that the user is authorized to use the system. That is, it is mainly assumed that the identification processing is used for login using face authentication. However, if the user is identified as the pre-registered individual (name) based on the input data in which the user's voice is recorded (input data for identification), the user may be authorized to use the system. That is, the identification processing may be used for login using voice authentication.

Note that the "neural network" used in the present specification does not necessarily mean only a processing layer group having all of an input layer, an intermediate layer, and an output layer. For example, the "neural network" used in the present specification also means one or a plurality of processing layers obtained by cutting out only a part (for example, only some intermediate layers) from the processing layer group having all of the input layer, the intermediate layer, and the output layer. In addition, each processing layer constituting the neural network is configured to include one or a plurality of neurons, and a weight and a bias are set for each neuron. In the learning processing, the weight set for each neuron is mainly updated.

FIG. 6 is a diagram illustrating an example of a neural network used for learning processing according to an embodiment of the present disclosure. As illustrated in FIG. 6, a neural network 70-1 used for learning processing according to an embodiment of the present disclosure includes a convolution layer 71-1, a pooling layer 71-2, a full connected layer 72, and a SoftMax Loss layer 74. Further, the neural network 70-1 includes an up-sampling layer 73-1, a convolution layer 73-2, and an L2 Loss layer 75.

Referring to FIG. 6, a first neural network N1 includes an up-sampling layer 73-1 and a convolution layer 73-2. However, the type and number of processing layers included in the first neural network N1 are not limited. That is, the first neural network N1 only needs to include one or a plurality of processing layers, and the types of the processing layers are not limited to the up-sampling layer and the convolution layer. As an example, the first neural network N1 may include a full connected layer. As teacher data D20 of output data of the first neural network N1, the same data as the input data for learning D10 is used. That is, the first neural network N1 can function as an auto encoder (AE).

A second neural network N2 includes a convolution layer 71-1 and a pooling layer 71-2. However, the type and number of processing layers included in the second neural network N2 are not limited. That is, the second neural network N2 only needs to include one or a plurality of processing layers, and the types of the processing layers are not limited to the convolutional layer and the pooling layer. For example, the second neural network N2 may include a full connected layer. The input data for learning D10 is input to the second neural network N2. In addition, a Feature D12 is output from the second neural network N2.

A third neural network N3 includes a full connected layer 72. The Feature D12 is input to the third neural network N3. In addition, the third neural network N3 outputs an identification ID D13 for identifying an individual. In the example illustrated in FIG. 6, the third neural network N3 is connected to a rear stage of the second neural network N2 in parallel with the first neural network N1. However, the third neural network N3 may not be connected to the rear stage of the second neural network N2. In such a case, instead of an error (third error) between the third neural network N3 and the teacher data, it is sufficient that an error (second error) between the second neural network N2 and the teacher data is calculated.

The first learning unit 111 causes the input data for learning D10 to be input to the second neural network N2. Then, the first learning unit 111 sequentially propagates the data in the order of the second neural network N2 and the first neural network N1, based on the input data for learning D10. Thereby, the first learning unit 111 obtains output data of the first neural network N1. The first learning unit 111 learns parameters of the first neural network N1 based on an error (first error) between the output data of the first neural network N1 and the teacher data D20 (the same data as the input data for learning D10).

Here, it is assumed that a mean squared error (MSE) between the output data of the first neural network N1 and the teacher data D20 (hereinafter, also simply referred to as "L2 Loss") is calculated as the first error by the L2 Loss layer 75. However, the first error is not limited to the L2 Loss. The first learning unit 111 learns the parameters of the first neural network N1 such that the L2 Loss decreases. That is, the first learning unit 111 learns the parameters of the first neural network N1 such that the information (face image) about the individual is easily restored from the Feature D12.

For example, the first learning unit 111 back-propagates the L2 Loss from downstream to upstream (in a direction R1) (using an error back-propagation method), thereby learning the parameters of the first neural network N1. As a parameter updating method, a stochastic gradient descent method (SGD) may be used. However, the parameter updating method is not limited to the SGD. For example, as the parameter updating method, Momentum may be used, AdaGrad may be used, or Adam may be used.

On the other hand, based on the input data for learning D10, the second learning unit 112 also forward-propagates the data to the third neural network N3 of the rear stage of the second neural network N2. Thereby, the second learning unit 112 obtains the identification ID D13 as output data of the third neural network N3. The second learning unit 112 updates the parameters of the third neural network N3 based on a third error between the identification ID D13 and the teacher data.

Here, it is assumed that the SoftMax Loss layer 74 applies a SoftMax function to the identification ID D13 and calculates a value (hereinafter, simply referred to as "SoftMax Loss") obtained by taking a cross entropy of the identification ID after applying the SoftMax function and teacher data as the third error. However, the third error is not limited to the SoftMax Loss. For example, the third error may be a center loss based on the identification ID D13. The calculation of the center loss is described in detail in Non Patent Literature 2 described above.

For example, the second learning unit 112 learns the parameters of the third neural network N3 such that the SoftMax Loss decreases. The second learning unit 112 back-propagates the SoftMax Loss from downstream to upstream (in a direction R0) (using an error back-propagation method), thereby learning the parameters of the third neural network N3. The parameter updating method is not limited as in the parameter updating method used for parameter learning of the first neural network N1. Then, the second learning unit 112 transmits an error (second error) from the third neural network N3 to the second neural network N2.

The second learning unit 112 learns at least some parameters of the second neural network N2 so that the L2 Loss increases (and the SoftMax Loss decreases). That is, the second learning unit 112 learns the parameters of the second neural network N2 so that the information (face image) about the individual is difficult to be restored from the Feature D12. As a result, it is possible to use (learn) the Feature D12 in which the information (face image) about the individual is difficult to be restored while enabling the identification processing.

Specifically, the second learning unit 112 learns at least some parameters of the second neural network N2 based on the second error transmitted from the third neural network N3 (an error between data different from the input data for learning D10 and the output data of the second neural network N2) and a sign-inverted data of the error transmitted from the first neural network N1. Here, it is assumed that the parameters of all of the second neural network N2 (convolution layer 71-1 and pooling layer 71-2) are learned. However, as will be described later, the parameters of all of the second neural network N2 do not need to be learned.

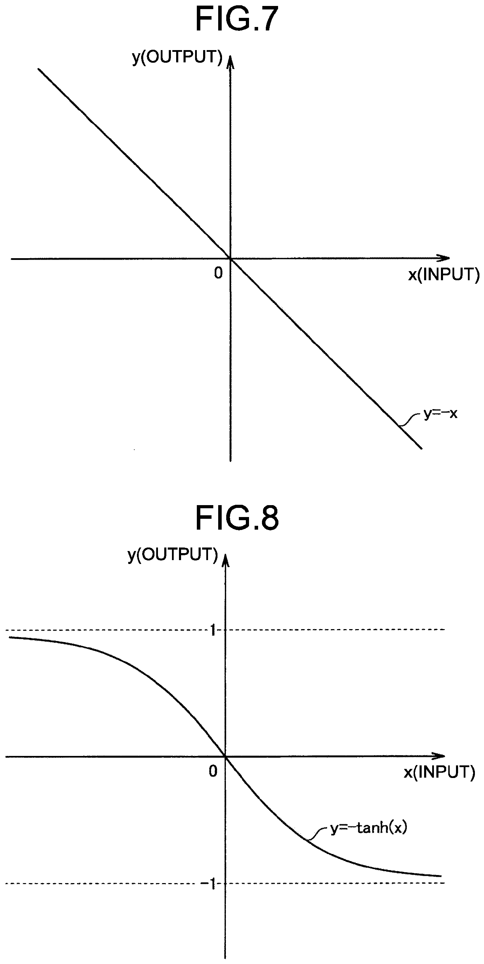

Here, in the conversion from the error transmitted from the first neural network N1 to the sign-inverted data, it is preferable that a predetermined conversion is performed such that a sign is inverted while an absolute value of the sign-inverted data is increased as an absolute value of the error transmitted from the first neural network N1 is increased. As a result, the larger the error transmitted from the first neural network N1, the smaller the error transmitted to the second neural network N2. Here, an example of the conversion from the error transmitted from the first neural network N1 to the sign-inverted data will be described with reference to FIGS. 7 and 8.

FIG. 7 is a diagram illustrating a first example of conversion from an error transmitted from the first neural network N1 to sign-inverted data. FIG. 8 is a diagram illustrating a second example of conversion from the error transmitted from the first neural network N1 to the sign-inverted data. In the examples illustrated in FIGS. 7 and 8, x represents an input (an error transmitted from the first neural network N1). On the other hand, y represents an output (sign-inverted data). FIG. 7 illustrates y = -x, and FIG. 8 illustrates y = -tanh (x). However, the conversion of the error transmitted from the first neural network N1 to the sign-inverted data is not limited to these examples.

Returning to FIG. 6, the description will be continued. The second learning unit 112 transmits the calculation result to the second neural network N2. The second learning unit 112 performs a predetermined operation 76 on the second error transmitted from the third neural network N3 and the sign-inverted data, and learns at least some parameters of the second neural network N2 based on the operation result obtained by the predetermined operation 76. Here, the predetermined operation may include addition. As a result, at least some parameters of the second neural network N2 are learned so that the L2 Loss increases and the SoftMax Loss decreases.

For example, the second learning unit 112 uses the error backpropagation method based on the second error transmitted from the third neural network N3 and the sign-inverted data, and learns at least some parameters of the second neural network N2. The second learning unit 112 back-propagates the second error transmitted from the third neural network N3 from downstream to upstream (in a direction R2), thereby learning the parameters of the second neural network N2. The parameter updating method is not limited as in the parameter updating method used for parameter learning of the first neural network N1.

When the updating of the parameters based on the N image data and the N ID labels is completed, the parameters are updated based on new N image data and N ID labels. Then, when the predetermined number of calculations (predetermined number of parameter updates) has been completed, the learning processing ends. Here, the predetermined number is not limited. For example, the predetermined number may be determined in units of epochs (the number of times the same input data for learning is repeatedly used), or may be determined in units of iterations (number of times of updating the input data for learning). Alternatively, the learning processing may end when the error becomes a predetermined value or less.

The details of the learning processing executed by the learning device 10 according to the embodiment of the present disclosure have been described above.

### [1.6. Flow of learning processing]

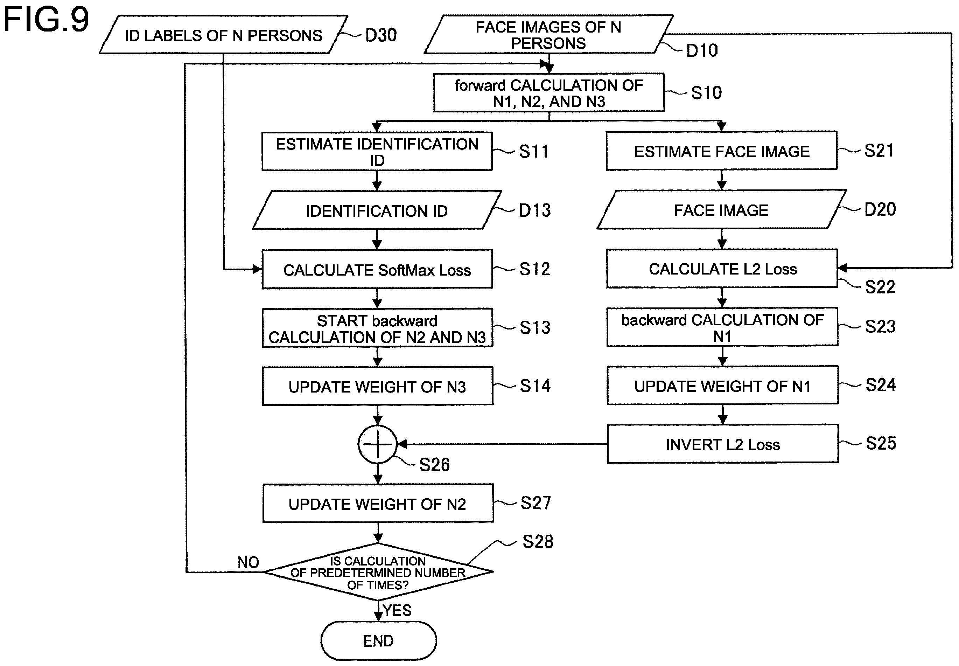

Subsequently, an example of a flow of learning processing according to an embodiment of the present disclosure will be described. FIG. 9 is a flowchart illustrating an example of a flow of learning processing according to an embodiment of the present disclosure. Note that the flowchart illustrated in FIG. 9 is merely an example of the flow of the learning processing according to the embodiment of the present disclosure. Therefore, the flow of the learning processing according to the embodiment of the present disclosure is not limited to the example illustrated in the flowchart of FIG. 9.

The first learning unit 111 causes the second neural network N2 to input face images of N persons as an example of the input data for learning. Then, the first learning unit 111 performs forward calculation on the second neural network N2 and the first neural network N1 in order based on the face images of the N persons (forward-propagates the data) (S10). As a result, since the face image is estimated by the second neural network N2 and the first neural network N1 (S21), the first learning unit 111 obtains the estimated face image D20.

The L2 Loss layer 75 calculates the L2 Loss (first error) between the estimated face image D20 and the face images of the N persons (S22). The first learning unit 111 performs backward calculation from the downstream to the upstream of the first neural network N1 (back-propagates the error) based on the L2 Loss (S23). As a result, a weight of the first neural network N1 is updated (S24). The first learning unit 111 inverts the sign of the L2 Loss (S25), and transmits the sign-inverted data to the second neural network N2.

The second learning unit 112 performs forward calculation from the upstream to the downstream of the third neural network N3 of the rear stage of the second neural network N2 based on the face images of the N persons (forward-propagates the data) (S10). As a result, since the identification ID is estimated by the third neural network N3 (S11), the second learning unit 112 obtains the identification ID D13.

The SoftMax Loss layer 74 applies a SoftMax function to the identification ID D13, and calculates an error (SoftMax Loss) between the identification ID after applying the SoftMax function and the ID label of N persons as an example of the teacher data as a third error (S12). The second learning unit 112 starts backward calculation in the order of the third neural network N3 and the second neural network N2 based on the SoftMax Loss (back-propagates the error) (S13). As a result, first, a weight of the third neural network N3 is updated (S14). Then, the second learning unit 112 transmits an error (second error) from the third neural network N3 to the second neural network N2.

The second learning unit 112 performs a predetermined operation (for example, addition) on the sign-inverted data of the error transmitted from the first neural network N1 and the error transmitted from the third neural network N3 (S26), and back-propagates the error from the downstream to the upstream of the second neural network N2 based on the obtained operation result. As a result, the weight of the second neural network N2 is updated so that the L2 Loss increases (and the SoftMax Loss decreases) (S27). That is, a Feature is learned in which the information (face image) about an individual is difficult to be restored while enabling the identification processing.

When the update of the weight of the second neural network N2 is completed, the operation moves to S28. Then, if the calculation of the predetermined number of times (update of the weight of the predetermined number of times) is not completed ("NO" in S28), the operation is moved to S10, and weights are updated based on new face images of N persons and ID labels of N persons. On the other hand, when the calculation of the predetermined number of times (update of the weight of the predetermined number of times) is completed ("YES" in S28), the learning processing ends.

The flow of the learning processing according to the embodiment of the present disclosure has been described above.

### [1.7. Flow of registration processing]

The client device 20 downloads an application (learned neural network application) from the learning device 10 based on an operation by a user (or automatically). Such an application is an application that includes the second neural network N2 after the parameter update, and is an application that can extract a feature amount (for example, a face feature amount) from input data for registration (for example, image data). The client device 20 executes the downloaded application. When the application is executed, registration processing is first executed.

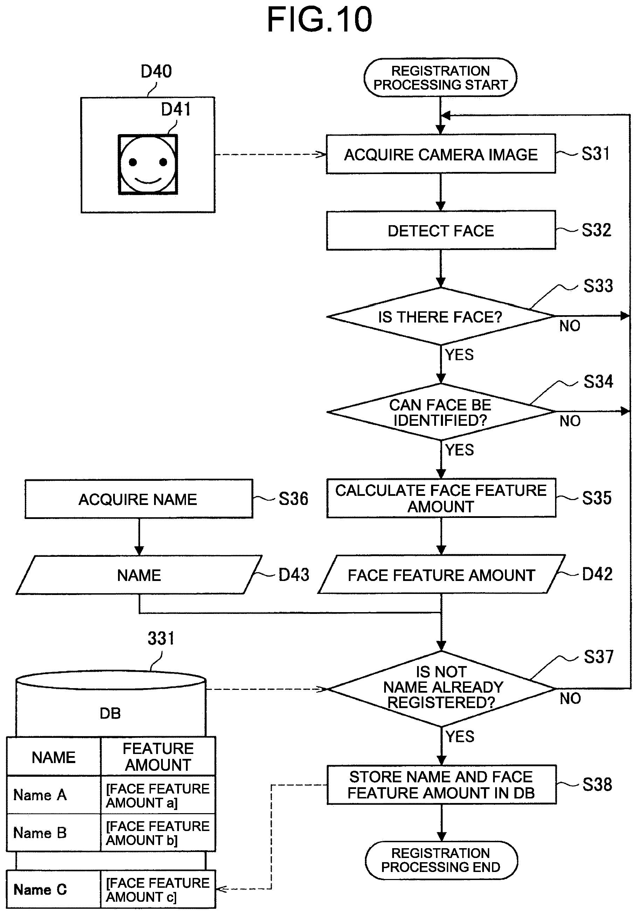

Hereinafter, an example of a flow of registration processing according to an embodiment of the present disclosure will be described. FIG. 10 is a flowchart illustrating an example of a flow of registration processing according to an embodiment of the present disclosure. Note that the flowchart illustrated in FIG. 10 merely illustrates an example of the flow of the registration processing according to the embodiment of the present disclosure. Therefore, the flow of the registration processing according to the embodiment of the present disclosure is not limited to the example illustrated in the flowchart of FIG. 10.

As illustrated in FIG. 10, when the registration processing is started, the registration processing unit 211 acquires the image data (camera image) detected by the sensor unit 260 as an example of the input data for registration (S31). FIG. 10 illustrates a camera image D40 in which a face D41 appears as an example. The registration processing unit 211 attempts to detect a face from the camera image (S32), and moves the operation to S31 if there is no face in the camera image ("NO" in S33). On the other hand, if there is a face in the camera image ("YES" in S33), the registration processing unit 211 determines whether the face can be identified from the camera image (S34).

If the face cannot be identified from the camera image ("NO" in S34), the registration processing unit 211 moves the operation to S31. On the other hand, if the face can be identified from the camera image ("YES" in S34), the registration processing unit 211 calculates a face feature amount (S35). Specifically, the registration processing unit 211 causes the camera image to be input to the learned second neural network N2, and obtains output data from the learned second neural network N2 as the face feature amount D42.

In addition, the registration processing unit 211 acquires a user's own name D43 input by the user (S36). The registration processing unit 211 provides the user's own name D43 and face feature amount D42 to the server device 30 via the communication unit 240. At this time, the face feature amount D42 flows through the network 50, but since the face feature amount D42 is extracted in which the face image is difficult to be restored, a risk that the face image is restored by a third party from the face feature amount D42 is reduced even if the face feature amount D42 is stolen by the third party. Further, the face feature amount D42 may be provided from the client device 20 to the server device 30 after being encrypted. Then, robustness of the face feature amount D42 is further improved.

The control unit 310 of the server device 30 acquires the user's own name D43 and the face feature amount D42 via the communication unit 340. If the acquired user's own name D43 is already registered in a DB 331 ("NO" in S37), the control unit 310 moves the operation to S31.

On the other hand, if the acquired user's own name D43 is not yet registered in the DB 331 ("YES" in S37), the control unit 310 stores the user's own name D43 and the face feature amount D42 in the DB 331 (S38). In the example illustrated in FIG. 10, a combination of a name "Name C" and a feature amount "face feature amount c" of Mr. C is stored in the DB 331. The control unit 310 returns a registration completion notification to the client device 20 via the communication unit 340.

In the client device 20, when the registration processing unit 211 obtains the registration completion notification via the communication unit 240, the registration processing unit 211 displays that registration has been completed, and the registered name is used by the application.

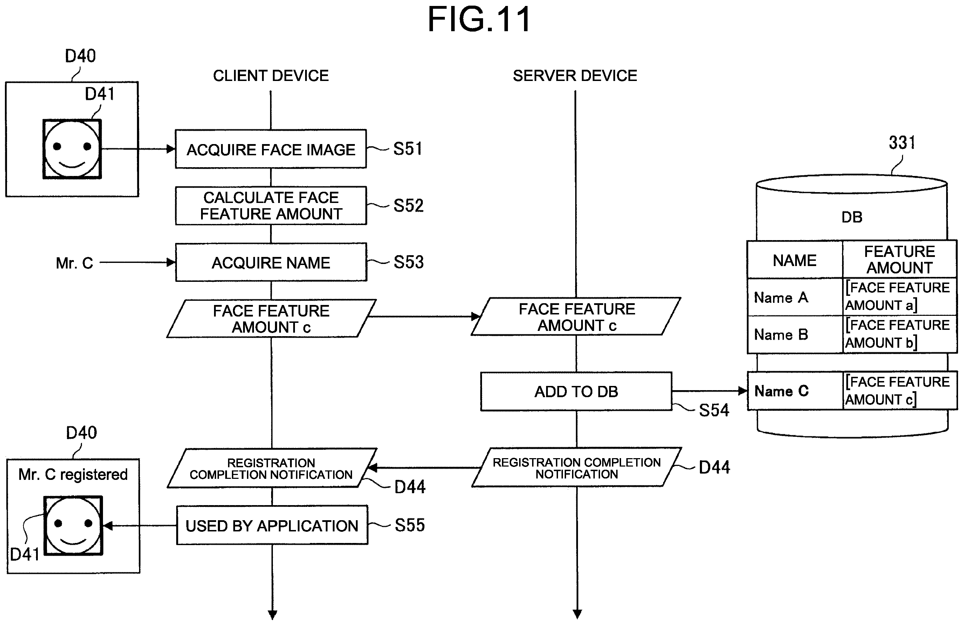

FIG. 11 is a sequence diagram illustrating an example of a flow of the registration processing according to the embodiment of the present disclosure. Note that the sequence diagram illustrated in FIG. 11 merely illustrates an example of the flow of the registration processing according to the embodiment of the present disclosure. Therefore, the flow of the registration processing according to the embodiment of the present disclosure is not limited to the example illustrated in the sequence diagram of FIG. 11.

As illustrated in FIG. 11, when the registration processing is started, the registration processing unit 211 acquires image data (camera image) detected by the sensor unit 260. The registration processing unit 211 acquires a face image from the camera image (S51), and calculates a face feature amount from the face image (S52). Specifically, the registration processing unit 211 causes the camera image to be input to the learned second neural network N2, and obtains output data from the learned second neural network N2 as a face feature amount c.

In addition, the registration processing unit 211 acquires a user's own name "Mr. C" input by the user (S53). The registration processing unit 211 provides the user's own name "Mr. C" and the face feature amount c to the server device 30 via the communication unit 240. At this time, the face feature amount D42 flows through the network 50, but since the face feature amount c is extracted in which the face image is difficult to be restored, a risk that the face image is restored by a third party from the face feature amount c is reduced even if the face feature amount c is stolen by the third party. Further, the face feature amount c may be provided from the client device 20 to the server device 30 after being encrypted. Then, robustness of the face feature amount c is further improved.

The control unit 310 of the server device 30 acquires the user's own name "Mr. C" and the face feature amount c via the communication unit 340. The control unit 310 adds the acquired user's own name "Mr. C" and the face feature amount c to the DB 331 (S54). In the example illustrated in FIG. 11, a combination of the name "Name C" and the "face feature amount c" of Mr. C is added to the DB 331. The control unit 310 returns a registration completion notification D44 to the client device 20 via the communication unit 340.

In the client device 20, when the registration processing unit 211 acquires the registration completion notification D44 via the communication unit 240, the registration processing unit 211 controls the output unit 250 so that the output unit 250 outputs that registration has been completed. The registered name is used by the application in the client device 20 (S55).

The flow of the registration processing according to the embodiment of the present disclosure has been described above.

### [1.8. Flow of identification processing]

After the registration processing is completed as described above, when the user intends to use the application again, the user performs an operation for executing the application again. The client device 20 executes the application again based on the operation by the user. When the application is executed, identification processing is executed.

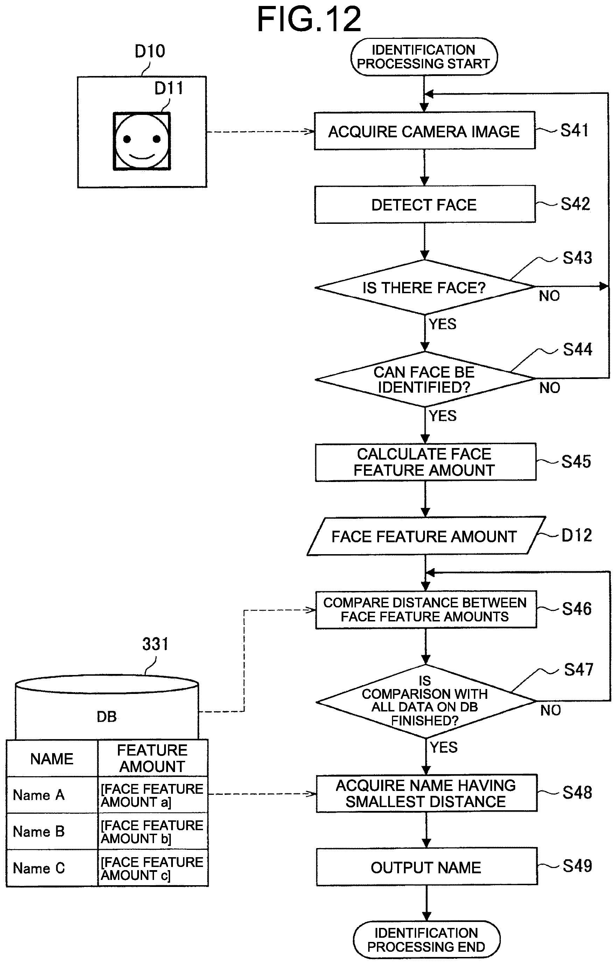

Hereinafter, an example of a flow of identification processing according to an embodiment of the present disclosure will be described. FIG. 12 is a flowchart illustrating an example of a flow of identification processing according to an embodiment of the present disclosure. Note that the flowchart illustrated in FIG. 12 merely illustrates an example of the flow of the identification processing according to the embodiment of the present disclosure. Therefore, the flow of the identification processing according to the embodiment of the present disclosure is not limited to the example illustrated in the flowchart of FIG. 12.

As illustrated in FIG. 12, when the identification processing is started, the identification target data input unit 212 acquires the image data (camera image) detected by the sensor unit 260 as an example of the input data for identification (S41). FIG. 12 illustrates a camera image D10 in which a face D11 appears as an example. The identification target data input unit 212 attempts to detect a face from the camera image (S42), and moves the operation to S41 if there is no face in the camera image ("NO" in S43). On the other hand, if there is a face in the camera image ("YES" in S43), the identification target data input unit 212 determines whether the face can be identified from the camera image (S44).

If the face cannot be identified from the camera image ("NO" in S44), the identification target data input unit 212 moves the operation to S41. On the other hand, if the face can be identified from the camera image ("YES" in S44), the identification target data input unit 212 calculates a face feature amount (S45). Specifically, the identification target data input unit 212 causes the camera image to be input to the learned second neural network N2, and obtains output data from the learned second neural network N2 as a face feature amount D12.

In addition, the identification information acquisition unit 213 provides the face feature amount D12 to the server device 30 via the communication unit 240. At this time, the face feature amount D12 flows through the network 50, but since the face feature amount D12 is extracted in which the face image is difficult to be restored, a risk that the face image is restored by a third party from the face feature amount D12 is reduced even if the face feature amount D12 is stolen by the third party. Further, the face feature amount D12 may be provided from the client device 20 to the server device 30 after being encrypted. Then, robustness of the face feature amount D12 is further improved.

The control unit 310 of the server device 30 acquires the face feature amount D12 via the communication unit 340. The control unit 310 compares a distance between the acquired face feature amount D12 and the face feature amount registered in the DB 331 (S46). The control unit 310 moves the operation to S46 until the distance between the face feature amount D12 and each of all the face feature amounts registered in the DB 331 is compared ("NO" in S47). On the other hand, when the comparison of the distance between the face feature amount D12 and each of all the face feature amounts registered in the DB 331 is finished ("YES" in S47), the control unit 310 acquires, from the DB 331, a name corresponding to the feature amount having the smallest distance from the face feature amount D12 as an example of the identification information (S48).

The control unit 310 returns the name to the client device 20 via the communication unit 340. In the client device 20, the identification information acquisition unit 213 acquires the name of the identification information via the communication unit 240. The output control unit 214 controls the output unit 250 so that the name is output (S49). The output name is used by the application.

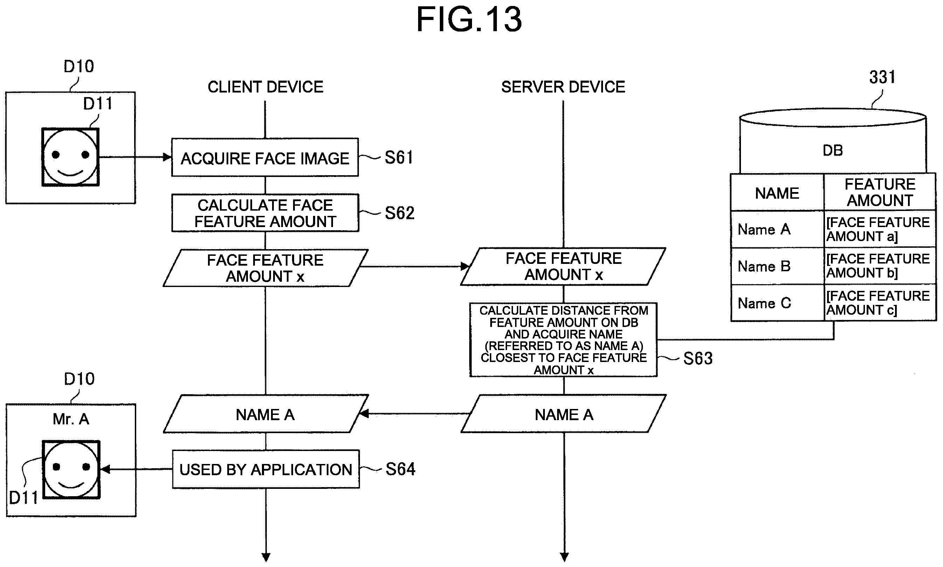

FIG. 13 is a sequence diagram illustrating an example of a flow of identification processing according to an embodiment of the present disclosure. Note that the sequence diagram illustrated in FIG. 13 merely illustrates an example of the flow of the identification processing according to the embodiment of the present disclosure. Therefore, the flow of the identification processing according to the embodiment of the present disclosure is not limited to the example illustrated in the sequence diagram of FIG. 13.

As illustrated in FIG. 13, when the identification processing is started, the identification target data input unit 212 acquires image data (camera image) detected by the sensor unit 260. The identification target data input unit 212 acquires a face image from the camera image (S61), and calculates a face feature amount from the face image (S62). Specifically, the identification target data input unit 212 causes the camera image to be input to the learned second neural network N2, and obtains output data from the learned second neural network N2 as a face feature amount x.

In addition, the identification information acquisition unit 213 provides the face feature amount x to the server device 30 via the communication unit 240. At this time, the face feature amount x flows through the network 50, but since the face feature amount x is extracted in which the face image is difficult to be restored, a risk that the face image is restored by a third party from the face feature amount x is reduced even if the face feature amount x is stolen by the third party. Further, the face feature amount x may be provided from the client device 20 to the server device 30 after being encrypted. Then, robustness of the face feature amount x is further improved.

The control unit 310 of the server device 30 acquires the face feature amount x via the communication unit 340. The control unit 310 calculates a distance between the acquired face feature amount x and the face feature amount registered in the DB 331, and acquires, from the DB 331, a name (referred to as a name A) corresponding to the face feature amount closest to the face feature amount x (S63). In the example illustrated in FIG. 13, the name "Name A" of Mr. A corresponding to "face feature amount a" is acquired from the DB 331. The control unit 310 returns the name A to the client device 20 via the communication unit 340.

In the client device 20, the identification information acquisition unit 213 acquires the name A via the communication unit 240. Then, the output control unit 214 controls the output unit 250 such that the output unit 250 outputs that the name A "Mr. A" has been identified. The identified name is used by the application (S64).

The flow of the identification processing according to the embodiment of the present disclosure has been described above.

### <2. Modified example>

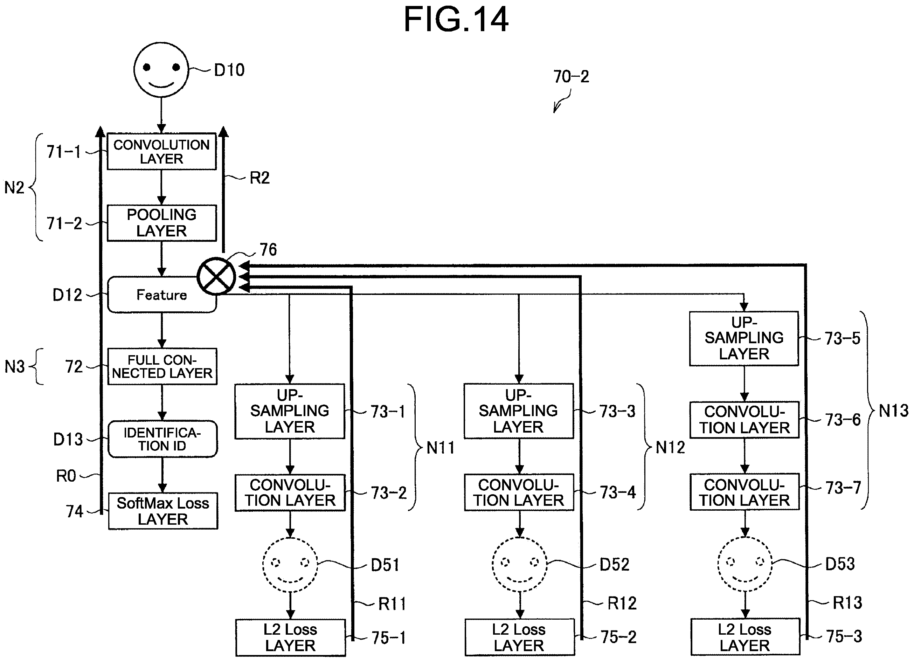

Subsequently, various modified examples will be described. In the above, the example in which one first neural network N1 is connected to the rear stage of the second neural network N2 has been described. However, a plurality of first neural networks N1 may be connected in parallel to the rear stage of the second neural network N2. Hereinafter, an example in which the plurality of first neural networks N1 are connected in parallel to the rear stage of the second neural network N2 will be described as a first modified example with reference to FIG. 14.

FIG. 14 is a diagram illustrating an example of a neural network according to a first modified example. Referring to FIG. 14, a neural network 70-2 according to a first modified example is illustrated. Three first neural networks (first neural networks N11 to N13) are connected in parallel to the rear stage of the second neural network N2. However, the number of first neural networks connected to the rear stage of the second neural network N2 is not limited.

Specifically, the first neural network N11 includes an up-sampling layer 73-1 and a convolution layer 73-2. The first neural network N12 includes an up-sampling layer 73-3 and a convolution layer 73-3. The first neural network N13 includes an up-sampling layer 73-5, an up-sampling layer 73-6, and a convolution layer 73-7.

As illustrated in FIG. 14, the same data as the input data for learning D10 is used as the teacher data D51 of the output data of the first neural network N11. In the first neural network N11, the L2 Loss layer 75-1 back-propagates the L2 Loss of between the output data of the first neural network N11 and the teacher data D51 from the downstream to the upstream (in a direction R11), thereby learning the parameters of the first neural network N11.

Similarly, the same data as the input data for learning D10 is used as teacher data D52 of the output data of the first neural network N12. In addition, in the first neural network N12, the L2 Loss layer 75-2 back-propagates the L2 Loss between the output data of the first neural network N12 and the teacher data D52 from the downstream to the upstream (in a direction R12), thereby learning the parameters of the first neural network N12.

As teacher data D53 of output data of the first neural network N13, the same data as the input data for learning D10 is used. In addition, in the first neural network N13, the L2 Loss layer 75-3 back-propagates the output data of the first neural network N13 and the L2 Loss of the teacher data D53 from the downstream to the upstream (in a direction R13), thereby learning the parameters of the first neural network N13.

The second learning unit 112 learns at least some parameters of the second neural network N2 based on the second error transmitted from the third neural network N3 (an error between data different from the input data for learning D10 and the output data of the second neural network N2) and sign-inverted data of the error transmitted from each of the first neural networks N11 to N13.

The type and number of processing layers included in each of the first neural networks N11 to N13 are not limited. However, it is preferable to change the network configuration (configuration of the processing layer) or to change initial values of the parameters between at least some of the first neural networks N11 to N13. As a result, it is possible to extract the feature amount that is more difficult to restore to the information (face image) about the individual by the second neural network N2.

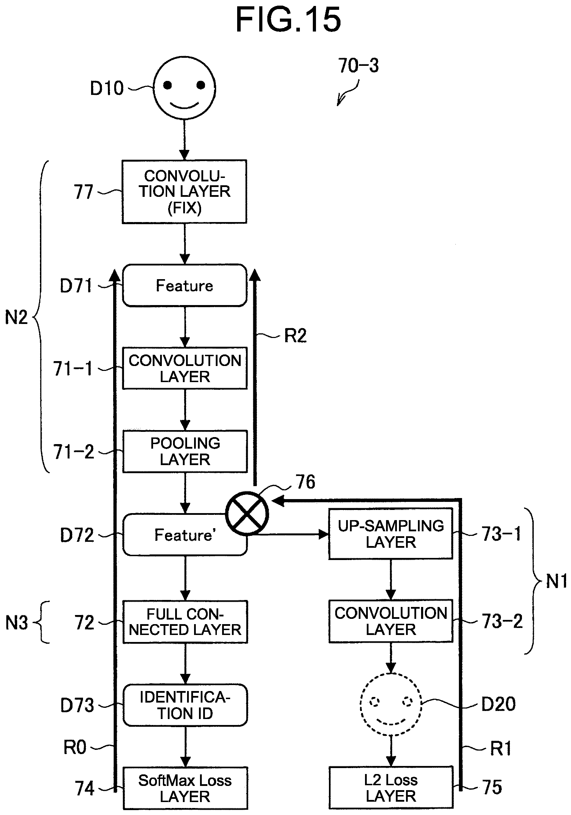

The first modified example has been described above. In addition, in the above, the example in which the parameters of all of the second neural network N2 (the convolution layer 71-1 and the pooling layer 71-2) are learned has been described. However, only some parameters of the second neural network N2 may be learned. Hereinafter, an example in which the parameters of some processing layers included in the second neural network N2 are not updated will be described as a second modified example with reference to FIG. 15.

FIG. 15 is a diagram illustrating an example of a neural network according to a second modified example. Referring to FIG. 15, a neural network 70-3 according to a second modified example is illustrated. The second neural network N2 includes a convolution layer 71-1 and a pooling layer 71-2, and also includes a convolution layer 77 upstream of the convolution layer 71-1. The convolution layer 77 has a feature amount extraction function of extracting a Feature D71. Then, the convolution layer 71-1 and the pooling layer 71-2 have a feature amount conversion function of outputting a Feature' D72 based on the Feature D71. The respective types and numbers of the processing layers having the feature amount extraction function and the processing layers having the feature amount conversion function are not limited.

Here, the parameters of the convolution layer 77 having the feature amount extraction function may be learned in advance. Then, the second learning unit 112 may learn the parameters of only some of the second neural network N2 (convolution layer 71-1 and pooling layer 71-2 having the feature amount conversion function) based on the second error transmitted from the third neural network N3 and sign-inverted data of the error transmitted from the first neural network N1. Thereby, it is possible to learn the extraction of the feature amount (conversion from the Feature D71 to the Feature' D72 that is difficult to restore to the information (face image) about the individual while enabling the identification processing.

The second modified example has been described above.

### <3. Hardware configuration example>

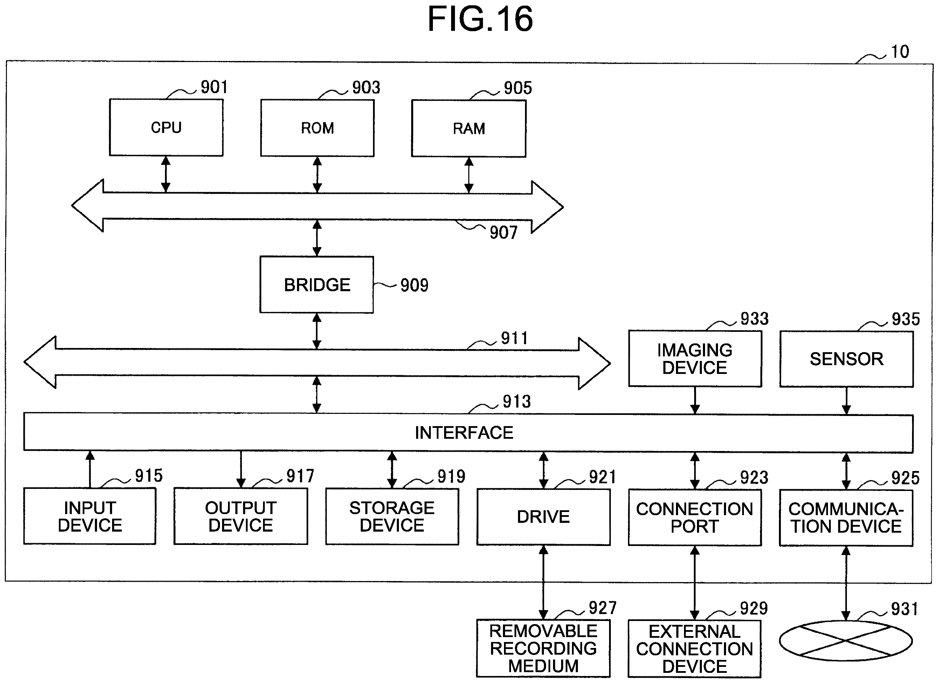

Next, a hardware configuration example of the learning device 10 according to the embodiment of the present disclosure will be described with reference to FIG. 16. FIG. 16 is a block diagram illustrating a hardware configuration example of the learning device 10 according to the embodiment of the present disclosure. Note that the learning device 10 does not necessarily need to have the entire hardware configuration illustrated in FIG. 16, and a part of the hardware configuration illustrated in FIG. 16 may not exist in the learning device 10. In addition, the hardware configuration of each of the client device 20 and the server device 30 may be realized in the same manner as the hardware configuration of the learning device 10.

As illustrated in FIG. 16, the learning device 10 includes a central processing unit (CPU) 901, a read only memory (ROM) 903, and a random access memory (RAM) 905. The learning device 10 may include a host bus 907, a bridge 909, an external bus 911, an interface 913, an input device 915, an output device 917, a storage device 919, a drive 921, a connection port 923, and a communication device 925. Further, the learning device 10 may include an imaging device 933 and a sensor 935 as needed. The learning device 10 may include a processing circuit called a graphics processing unit (GPU), a digital signal processor (DSP) or an application specific integrated circuit (ASIC) instead of or in addition to the CPU 901.

The CPU 901 functions as an arithmetic processing device and a control device, and controls the entire operation in the learning device 10 or a part thereof according to various programs recorded in the ROM 903, the RAM 905, the storage device 919, or a removable recording medium 927. The ROM 903 stores programs used by the CPU 901 or arithmetic parameters. The RAM 905 temporarily stores programs used in the execution of the CPU 901 and parameters that appropriately change in the execution. The CPU 901, the ROM 903, and the RAM 905 are interconnected by the host bus 907 configured by an internal bus such as a CPU bus. Further, the host bus 907 is connected to the external bus 911 such as a peripheral component interconnect/interface (PCI) bus via the bridge 909.

The input device 915 is a device operated by a user, such as a button, for example. The input device 915 may include a mouse, a keyboard, a touch panel, a switch, a lever, and the like. In addition, the input device 915 may include a microphone that detects a voice of the user. The input device 915 may be, for example, a remote control device using infrared rays or other radio waves, or may be an external connection device 929 such as a mobile phone corresponding to the operation of the learning device 10. The input device 915 includes an input control circuit that generates an input signal based on information input by the user and outputs the input signal to the CPU 901. By operating the input device 915, the user inputs various data to the learning device 10 or instructs the learning device 10 to perform a processing operation. In addition, an imaging device 933, which will be described later, can also function as the input device by imaging a movement of a hand of the user, a finger of the user, and the like. At this time, a pointing position may be determined according to the movement of the hand or the direction of the finger.

The output device 917 is configured by a device that can visually or audibly notify the user of the acquired information. The output device 917 may be, for example, a display device such as a liquid crystal display (LCD), an organic electro-luminescence (EL) display, or a sound output device such as a speaker and a headphone. In addition, the output device 917 may include a plasma display panel (PDP), a projector, a hologram, a printer device, and the like. The output device 917 outputs a result obtained by the processing of the learning device 10 as a video such as a text or an image, or outputs an audio such as a voice or a sound. In addition, the output device 917 may include a light or the like to brighten the surroundings.

The storage device 919 is a data storage device configured as an example of the storage unit of the learning device 10. The storage device 919 includes, for example, a magnetic storage device such as a hard disk drive (HDD), a semiconductor storage device, an optical storage device, or a magneto-optical storage device. The storage device 919 stores programs or various data executed by the CPU 901, and various data acquired from the outside.

The drive 921 is a reader/writer for a removable recording medium 927 such as a magnetic disk, an optical disk, a magneto-optical disk, or a semiconductor memory, and is built in or external to the learning device 10. The drive 921 reads information recorded on the attached removable recording medium 927 and outputs the information to the RAM 905. In addition, the drive 921 writes a record in the attached removable recording medium 927.

The connection port 923 is a port for directly connecting the device to the learning device 10. The connection port 923 can be, for example, a universal serial bus (USB) port, an IEEE1394 port, a small computer system interface (SCSI) port, or the like. The connection port 923 may be an RS-232C port, an optical audio terminal, a high-definition multimedia interface (HDMI) (registered trademark) port, or the like. By connecting the external connection device 929 to the connection port 923, various data can be exchanged between the learning device 10 and the external connection device 929.

The communication device 925 is a communication interface including, for example, a communication device for connecting to the network 931. The communication device 925 can be, for example, a communication card for wired or wireless local area network (LAN), Bluetooth (registered trademark), or wireless USB (WUSB). The communication device 925 may be a router for optical communication, an asymmetric digital subscriber line (ADSL) router, or a modem for various communication. The communication device 925 transmits and receives, for example, signals and the like to and from the Internet and other communication devices using a predetermined protocol such as TCP/IP. In addition, the network 931 connected to the communication device 925 is a network connected in a wired or wireless manner, and is, for example, the Internet, a home LAN, infrared communication, radio wave communication, satellite communication, or the like.

The imaging device 933 is a device that captures a real space and generates a captured image using various members such as an imaging element such as a charge coupled device (CCD) or complementary metal oxide semiconductor (CMOS) and a lens for controlling the formation of a subject image on the imaging element, for example. The imaging device 933 may capture a still image, or may capture a moving image.

The sensor 935 is, for example, various sensors such as a distance measuring sensor, an acceleration sensor, a gyro sensor, a geomagnetic sensor, a vibration sensor, an optical sensor, and a sound sensor. The sensor 935 acquires information on the state of the learning device 10 itself, such as a posture of the housing of the learning device 10, and information on the surrounding environment of the learning device 10, such as brightness and noise around the learning device 10. The sensor 935 may include a global positioning system (GPS) sensor that receives a GPS signal and measures the latitude, longitude, and altitude of the device.

### <4. Conclusion>

According to the embodiment of the present disclosure, there is provided the learning device including the first learning unit that learns the parameters of the first neural network based on the first error between the same data as the input data to the second neural network connected to a front stage of the first neural network and the output data of the first neural network, and the second learning unit that learns at least some parameters of the second neural network based on the second error between the data different from the input data and the output data of the second neural network and the sign-inverted data of the error transmitted from the first neural network.

According to such a configuration, it is possible to use the feature amount in which the information about the individual is difficult to be restored while enabling the identification processing.

The preferred embodiments of the present disclosure have been described above in detail with reference to the accompanying drawings, but the technical scope of the present disclosure is not limited to such examples. It is obvious that a person having ordinary knowledge in the technical field of the present disclosure can arrive at various changes or modifications within the scope of the technical idea described in the claims, and it is understood that these changes or modifications also belong to the technical scope of the present disclosure.

In addition, the effects described in the present specification are merely illustrative or exemplary and are not limited. That is, the technology according to the present disclosure can exhibit other effects that are apparent to those skilled in the art from the description of the present specification in addition to or instead of the effects.

Note that the following configurations also belong to the technical scope of the present disclosure.
(1) A learning device comprising:
   a first learning unit that learns parameters of a first neural network based on a first error between the same data as input data to a second neural network connected to a front stage of the first neural network and output data of the first neural network; and
   a second learning unit that learns at least some parameters of the second neural network based on a second error between data different from the input data and output data of the second neural network and sign-inverted data of an error transmitted from the first neural network.
(2) The learning device according to (1), wherein the first learning unit learns the parameters of the first neural network so that the first error decreases.
(3) The learning device according to (2), wherein the first learning unit learns the parameters of the first neural network using an error back propagation method based on the first error.
(4) The learning device according to any one of (1) to (3), wherein the second learning unit learns at least some parameters of the second neural network so that the first error increases.
(5) The learning device according to any one of (1) to (4), wherein the second learning unit learns at least some parameters of the second neural network based on an operation result obtained by performing a predetermined operation on the second error and the sign-inverted data.
(6) The learning device according to (5), wherein the predetermined operation includes addition.
(7) The learning device according to (5) or (6), wherein the second learning unit learns at least some parameters of the second neural network using an error back propagation method based on the second error and the sign-inverted data.
(8) The learning device according to (7), wherein the second learning unit transmits the operation result to the second neural network.
(9) The learning device according to any one of (1) to (8), wherein a third neural network is connected in parallel with the first neural network to a rear stage of the second neural network, and
   the second learning unit transmits the second error from the third neural network to the second neural network.
(10) The learning device according to (9), wherein the second learning unit updates parameters of the third neural network using an error back propagation method based on a third error between output data of the third neural network and teacher data, and transmits the second error to the second neural network.
(11) The learning device according to any one of (1) to (10), wherein a plurality of first neural networks are connected in parallel to a rear stage of the second neural network,
   the first learning unit learns parameters of the plurality of first neural networks based on a first error between the same data as the input data to the second neural network and output data of each of the plurality of first neural networks, and
   the second learning unit learns at least some parameters of the second neural network based on a second error between data different from the input data and output data of the second neural network and sign-inverted data of an error transmitted from each of the first neural networks.
(12) The learning device according to any one of (1) to (11), wherein a conversion from the error transmitted from the first neural network to the sign-inverted data is a predetermined conversion that inverts a sign while increasing an absolute value of the sign-inverted data as an absolute value of the error increases.
(13) The learning device according to any one of (1) to (12), wherein the input data includes at least one of image data and voice data.
(14) The learning device according to any one of (1) to (13), wherein the first error is a mean squared error.
(15) The learning device according to (10), wherein the third error is a value obtained by taking a cross entropy with data different from the input data after applying a SoftMax function to the output data or a center loss based on the output data.
(16) A program that causes a computer to function as a learning device including:
   a first learning unit that learns parameters of a first neural network based on a first error between the same data as input data to a second neural network connected to a front stage of the first neural network and output data of the first neural network; and
   a second learning unit that learns at least some parameters of the second neural network based on a second error between data different from the input data and output data of the second neural network and sign-inverted data of an error transmitted from the first neural network.
(17) An identification device comprising:
   for a neural network learned in a learning unit that
   learns parameters of a first neural network based on a first error between the same data as input data to a second neural network connected to a front stage of the first neural network and output data of the first neural network, and
   learns at least some parameters of the second neural network based on a second error between data different from the input data and output data of the second neural network and sign-inverted data of an error transmitted from the first neural network,
   an input unit that inputs identification target data; and
   an acquisition unit that acquires identification information corresponding to the output data based on the output data of the neural network.
(18) The identification device according to (17), wherein the same data as the output data is previously associated with the identification information as a feature amount, and
   the acquisition unit acquires the identification information associated with the feature amount according to the output data.
(19) The identification device according to (18), wherein the acquisition unit acquires the identification information based on encrypted output data.
(20) A program that causes a computer to function as an identification device including:
   for a neural network learned in a learning unit that
   learns parameters of a first neural network based on a first error between the same data as input data to a second neural network connected to a front stage of the first neural network and output data of the first neural network, and
   learns at least some parameters of the second neural network based on a second error between data different from the input data and output data of the second neural network and sign-inverted data of an error transmitted from the first neural network,
   an input unit that inputs identification target data; and
   an acquisition unit that acquires identification information corresponding to the output data based on the output data of the neural network.

### Reference Signs List

- 1: INFORMATION PROCESSING SYSTEM
- 10: LEARNING DEVICE
- 110: CONTROL UNIT
- 111: FIRST LEARNING UNIT
- 112: SECOND LEARNING UNIT
- 120: OPERATION UNIT
- 130: STORAGE UNIT
- 140: COMMUNICATION UNIT
- 150: OUTPUT UNIT
- 20: CLIENT DEVICE
- 210: CONTROL UNIT
- 211: REGISTRATION PROCESSING UNIT
- 212: IDENTIFICATION TARGET DATA INPUT UNIT
- 213: IDENTIFICATION INFORMATION ACQUISITION UNIT
- 214: OUTPUT CONTROL UNIT
- 220: OPERATION UNIT
- 230: STORAGE UNIT
- 240: COMMUNICATION UNIT
- 250: OUTPUT UNIT
- 260: SENSOR UNIT
- 30: SERVER DEVICE
- 310: CONTROL UNIT
- 330: STORAGE UNIT
- 340: COMMUNICATION UNIT
- 50: NETWORK

## Claims

1. A learning device comprising:
a first learning unit that learns parameters of a first neural network based on a first error between the same data as input data to a second neural network connected to a front stage of the first neural network and output data of the first neural network; and
a second learning unit that learns at least some parameters of the second neural network based on a second error between data different from the input data and output data of the second neural network and sign-inverted data of an error transmitted from the first neural network.

2. The learning device according to claim 1, wherein the first learning unit learns the parameters of the first neural network so that the first error decreases.

3. The learning device according to claim 2, wherein the first learning unit learns the parameters of the first neural network using an error back propagation method based on the first error.

4. The learning device according to claim 1, wherein the second learning unit learns at least some parameters of the second neural network so that the first error increases.

5. The learning device according to claim 1, wherein the second learning unit learns at least some parameters of the second neural network based on an operation result obtained by performing a predetermined operation on the second error and the sign-inverted data.

6. The learning device according to claim 5, wherein the predetermined operation includes addition.

7. The learning device according to claim 5, wherein the second learning unit learns at least some parameters of the second neural network using an error back propagation method based on the second error and the sign-inverted data.

8. The learning device according to claim 7, wherein the second learning unit transmits the operation result to the second neural network.

9. The learning device according to claim 1, wherein a third neural network is connected in parallel with the first neural network to a rear stage of the second neural network, and
the second learning unit transmits the second error from the third neural network to the second neural network.

10. The learning device according to claim 9, wherein the second learning unit updates parameters of the third neural network using an error back propagation method based on a third error between output data of the third neural network and teacher data, and transmits the second error to the second neural network.

11. The learning device according to claim 1, wherein a plurality of first neural networks are connected in parallel to a rear stage of the second neural network,
the first learning unit learns parameters of the plurality of first neural networks based on a first error between the same data as the input data to the second neural network and output data of each of the plurality of first neural networks, and
the second learning unit learns at least some parameters of the second neural network based on a second error between data different from the input data and output data of the second neural network and sign-inverted data of an error transmitted from each of the first neural networks.

12. The learning device according to claim 1, wherein a conversion from the error transmitted from the first neural network to the sign-inverted data is a predetermined conversion that inverts a sign while increasing an absolute value of the sign-inverted data as an absolute value of the error increases.

13. The learning device according to claim 1, wherein the input data includes at least one of image data and voice data.

14. The learning device according to claim 1, wherein the first error is a mean squared error.

15. The learning device according to claim 10, wherein the third error is a value obtained by taking a cross entropy with data different from the input data after applying a SoftMax function to the output data or a center loss based on the output data.

16. A program that causes a computer to function as a learning device including:
a first learning unit that learns parameters of a first neural network based on a first error between the same data as input data to a second neural network connected to a front stage of the first neural network and output data of the first neural network; and
a second learning unit that learns at least some parameters of the second neural network based on a second error between data different from the input data and output data of the second neural network and sign-inverted data of an error transmitted from the first neural network.

17. An identification device comprising:
for a neural network learned in a learning unit that
learns parameters of a first neural network based on a first error between the same data as input data to a second neural network connected to a front stage of the first neural network and output data of the first neural network, and
learns at least some parameters of the second neural network based on a second error between data different from the input data and output data of the second neural network and sign-inverted data of an error transmitted from the first neural network,
an input unit that inputs identification target data; and
an acquisition unit that acquires identification information corresponding to the output data based on the output data of the neural network.

18. The identification device according to claim 17, wherein the same data as the output data is previously associated with the identification information as a feature amount, and
the acquisition unit acquires the identification information associated with the feature amount according to the output data.

19. The identification device according to claim 18, wherein the acquisition unit acquires the identification information based on encrypted output data.

20. A program that causes a computer to function as an identification device including:
for a neural network learned in a learning unit that
learns parameters of a first neural network based on a first error between the same data as input data to a second neural network connected to a front stage of the first neural network and output data of the first neural network, and
learns at least some parameters of the second neural network based on a second error between data different from the input data and output data of the second neural network and sign-inverted data of an error transmitted from the first neural network,
an input unit that inputs identification target data; and
an acquisition unit that acquires identification information corresponding to the output data based on the output data of the neural network.
